# EUROPEAN PATENT APPLICATION

(11) **EP 4 400 832 A1**
(43) Date of publication of application: **17.07.2024**
(21) Application number: 22867339.8
(22) Date of filing: 06.09.2022
(51) Int. Cl.: G01N 21/892, D21F 7/00, G05B 19/418, G06T 7/00

(54) **DEFECT CLASSIFICATION SYSTEM**

(30) Priority: 07.09.2021 JP 2021145767
(71) Applicant: Maintech Co., Ltd., Chiyoda-ku Tokyo 100-0005 (JP)
(72) Inventor: SEKIYA, Hiroshi, Tokyo 100-0005 (JP); SAKATA, Hitomaru, Fuji-shi, Shizuoka 417-0003 (JP)
(74) Representative: Goddar, Heinz J.
(86) International application number: PCT/JP2022/033356
(87) International publication number: WO 2023/038017

(57) **Abstract**

To provide a defect classification system being simple in preparation and maintenance and capable of recognizing a cause of a defect. The present invention provides a defect classification system 10 including imaging means 11 for causing an imaging device G to image paper P2 that has passed through a dry part D and acquiring image data obtained by the imaging, detection means 12 for detecting a defect in the paper P2 in the image data, extraction means 13 for extracting a feature amount of the defect, calculation means 14 for causing a classification model 20 in which a reference feature amount is previously set to calculate a certainty factor in a defect cause item on the basis of the feature amount of the defect, and display means 15 for displaying the certainty factor, in which the classification model 20 is caused to learn the reference feature amount using machine learning from a relationship between respective feature amounts of defects previously stored and a plurality of defect cause items.

## Description

### Technical Field

The present invention relates to a defect classification system, and more specifically to a defect classification system for classifying defect information based on a defect in paper that has passed through a dry part in a papermaking process into a corresponding defect cause item among a plurality of defect cause items previously set.

### Background Art

In manufacture of paper, a paper material preparation process for fibrillating a dried pulp sheet and adding additives such as a filler and a sizing agent thereto, followed by agitation and mixing, to obtain a dispersion of pulp and a papermaking process using a papermaking machine to form the dispersion of pulp into paper via each of parts such as a wet part including a wire part and a press part, a dry part, and a reel part are performed.

In the papermaking process, conveyance of paper (including a state of wet paper before drying) is performed at significantly high speed from the viewpoint of productivity. Thus, when a defect such as adhesion of a foreign substance such as a pitch to paper occurs, yield can significantly decrease.

Therefore, in the papermaking process, various techniques have been developed for the purpose of preventing a defect from occurring as much as possible.

For example, there has been known a monitoring system including an application device for applying a chemical solution to a site of a papermaking machine that contacts paper, an operation panel for setting an application condition of the application device, a monitoring camera for monitoring a monitoring target site, and a control device connected to the monitoring camera via a network, the control device including an computation unit that converts a state of the monitoring target site into a numerical form by binarization using a video image shot by the monitoring camera, a display unit that displays detection data obtained by converting an amount of change in a binarized value during an operation from a binarized value in a steady state into a numerical form by the computation unit, and a storage unit that stores the detection data (see, e.g., PTL 1).

### Citation List

### Patent Literature

PTL 1: Japanese Patent Application No. 6697132

### Summary of Invention

### Technical Problem

In the monitoring system described in PTL 1, described above, it is possible to recognize a monitoring target site causing a defect and to prevent a defect based on monitoring target side from occurring in the paper. However, a monitoring camera needs to be installed in a high-temperature and high-humidity monitoring target side. Accordingly, there is a problem that preparation and maintenance are hard.

The present invention has been made in view of the foregoing circumstances, and has as its object to provide a defect classification system being simple in preparation and maintenance and capable of recognizing a cause of a defect.

### Solution to Problems

The present inventors have intensively studied to solve the above-described problem and found that a defect that has occurred in paper that has passed through a dry part has a feature. A defect classification system uses the paper that has passed through the dry part as a target of imaging and includes extraction means for extracting a feature amount of the defect, calculation means for calculating a certainty factor using a classification model caused to perform machine learning, display means for displaying the certainty factor, and the like, to find that the above-described problem can be solved, thereby completing the present invention.

The present invention resides in (1) a defect classification system for classifying defect information based on a defect in paper that has passed through a dry part in a papermaking process into a corresponding defect cause item among a plurality of defect cause items respectively based on causes of defects previously set, the defect classification system including imaging means for causing an imaging device to image the paper that has passed through the dry part and acquiring image data obtained by the imaging, detection means for detecting the defect in the paper in the image data, extraction means for extracting a feature amount of the defect, calculation means for causing a classification model in which a reference feature amount is previously set to calculate a certainty factor in the defect cause item on the basis of the feature amount of the defect, and display means for displaying the certainty factor, in which the classification model is caused to learn the reference feature amount using machine learning from a relationship between respective feature amounts of defects previously stored and the plurality of defect cause items.

The present invention resides in (2) the defect classification system described in the above (1), in which the certainty factor for each of the defect cause items is calculated in the calculation means, and further including classification means for classifying the defect information into the defect cause item as the certainty factor having a maximum value among the plurality of certainty factors.

The present invention resides in (3) the defect classification system described in the above (2), in which the classification model is caused to further perform learning using machine learning from a relationship between the feature amount of the defect the certainty factor having the maximum value of which is a previously set predetermined value or less and the defect cause item into which the defect is classified.

The present invention resides in (4) the defect classification system described in any one of the above (1) to (3), in which the defect information about the defect includes coordinate data of the defect in a case where the paper is provided with coordinates in addition to the feature amount of the defect.

The present invention resides in (5) the defect classification system described in any one of the above (1) to (4), in which the defect cause items include at least the item in which adhesion of a foreign substance in the dry part is a cause of the defect.

### Advantageous Effects of Invention

In a defect classification system according to the present invention, paper that has passed through a dry part in a papermaking process is used as a target of imaging. Accordingly, an imaging device may be installed after the dry part, for example. This eliminates the necessity of entering a device in which the papermaking process is performed to install, for example, the imaging device, thereby making it possible to significantly safely and simply perform preparation and maintenance for using the defect classification system.

In the defect classification system, the paper that has passed through the dry part is used as a target of imaging. Accordingly, a defect that has occurred in the paper is due to a paper material preparation process or a part before the dry part in the papermaking process.

The defect classification system according to the present invention includes detection means and extraction means. Accordingly, the defect that has occurred in the paper is detected, and a feature amount of the defect is extracted.

The defect classification system includes calculation means. Accordingly, a certainty factor for a defect cause item is calculated from the feature amount of the defect.

The certainty factor is displayed by display means.

From the foregoing, in the defect classification system, the certainty factor for the defect cause item of the defect can be recognized. As a result, it is possible to classify the defect into the defect cause item in which the certainty factor is high and at the same time to recognize a cause of the defect.

For example, when defect cause items include at least an item in which adhesion of a foreign substance in a dry part is a cause of a defect, a certainty factor for this item is recognized, thereby making it possible to recognize whether the cause of the defect is due to the dry part or a part other than the dry part.

When the defect classification system according to the present invention further includes classification means, the defect cause item including the defect can be recognized.

A reference feature amount in a classification model is changed on the basis of defect information about the defect and the defect cause item into which the defect is classified, thereby making it possible to improve an accuracy of the classification.

In the defect classification system according to the present invention, the classification model can be caused to further perform learning using machine learning from a relationship between a feature amount of a defect a certainty factor having a maximum value of which is a previously set predetermined value or less and a defect cause item into which the defect is classified. As a result, an accuracy of the certainty factor to be calculated by the classification model is further improved.

In the defect classification system according to the present invention, when the defect information about the defect includes coordinate data of the defect in a case where paper is provided with coordinates, a further detailed position of a part causing the defect can also be estimated from the coordinate data of the defect.

For example, when occurrence of a defect is repeated in a paper length direction, a foreign substance may adhere to a roll that guides the paper or a loop-shaped tool such as a felt or a canvas. From a distance between defects to be repeated, a diameter of the roll can be calculated when the foreign substance adheres to the roll, or a position of the foreign substance in the loop-shaped tool can be calculated when the foreign substance adheres to the loop-shaped tool.

### Brief Description of Drawings

Figure 1 is a block diagram for illustrating a configuration of a defect classification system according to the present embodiment.
Figure 2 is a schematic side view for illustrating a papermaking process using the defect classification system according to the present embodiment and an installation position of an imaging device.
Figure 3 is a diagram illustrating a defect cause item in the defect classification system according to the present embodiment and an image of a defect included in the defect cause item.
Figure 4 is a flow diagram illustrating a defect classification method according to the present embodiment.

### Description of Embodiments

A preferred embodiment of the present invention will be described in detail below with reference to the drawings, as needed. In the drawings, the same elements are respectively assigned the same reference numerals, and overlapping descriptions will be omitted. A positional relationship among the top, the bottom, the left, and the right, for example, is based on a positional relationship illustrated in the drawings unless otherwise noted. Further, a dimensional ratio in the drawings is not limited to a ratio as illustrated.

A defect classification system according to the present embodiment is a program stored in a computer, is hardware, and is effected for a papermaking machine in which an imaging device is arranged. The number of computers is not limited to one, but a plurality of computers may be used by being connected to one another in a wired or wireless manner.

As the above-described imaging device, a video camera, a line sensor camera, an area sensor camera, or the like can be adopted.

The above-described papermaking machine is not particularly limited if a series of devices capable of performing a so-called papermaking process, but conventionally known one can be appropriately adopted.

In the defect classification system, paper used as a target is not particularly limited if manufacturable by the papermaking process. Examples of the paper to be adopted can include so-called western paper such as printing paper, newsprint, coated paper, wrapping paper, thin paper, daily use paper such as toilet paper and tissue paper, and miscellaneous paper, and so-called board such as container board, white lined board, colored board, core paper, building material base, and various mounts.

In the present specification, "defect" means adhesion of a foreign substance (including incorporation of a foreign substance), a hole, partial paper breakage, a water stain, an oil stain, density unevenness of pulp, or the like.

"Foreign substance" includes not only a pitch but also an insect, paper powder, slime, or the like. "Pitch" is, among contaminants contained in pulp as a raw material for paper, sticky one derived from an adhesive tape or glue or sticky one derived from wood.

"Defect cause item" is an item set to distinguish among matters respectively causing defects. "A plurality of defect cause items" is an aggregate of defect cause items, and respective causes of defects in the defect cause items differ from one another.

"Certainty factor" is a statistical measure (probability) of how reliable prediction is.

The defect classification system according to the present embodiment is for classifying defect information based on a defect in paper after a dry part in a papermaking process into a corresponding defect cause item among a plurality of defect cause items respectively based on causes of defects previously set.

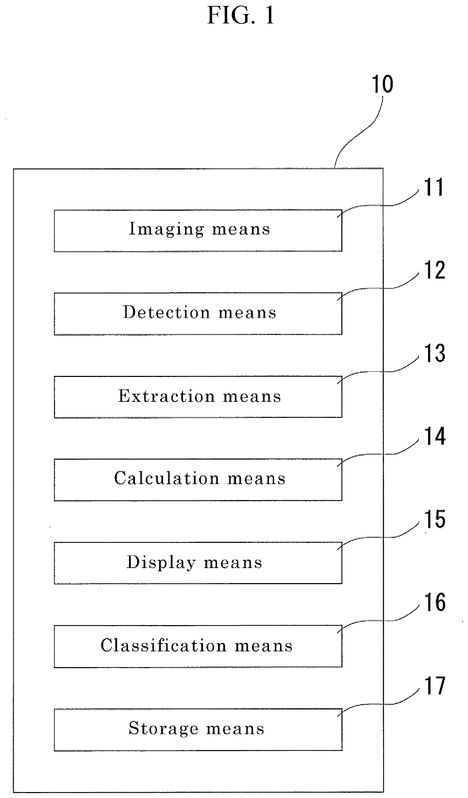

Figure 1 is a block diagram for illustrating a configuration of a defect classification system according to the present embodiment.

As illustrated in Figure 1, a defect classification system 10 includes imaging means 11 for causing an imaging device to image paper that has passed through a dry part and acquiring image data obtained by the imaging, detection means 12 for detecting a defect in the paper in the image data, extraction means 13 for extracting a feature amount of the defect, calculation means 14 for causing a classification model in which a reference feature amount is previously set to calculate a certainty factor in a defect cause item on the basis of the feature amount of the defect, display means 15 for displaying the certainty factor, classification means 16 for classifying defect information into the defect cause item in which the certainty factor is a previously set predetermined value or more, and storage means 17 for storing the image data.

The defect classification system includes the means, thereby making it possible to recognize the certainty factor for each of the defect cause item of the defect. As a result, it is possible to classify the defect into the defect cause item in which the certainty factor is high, and at the same time to recognize a cause of the defect, as described below.

The imaging means 11 is means for causing the imaging device to image the paper that has passed through the dry part and acquiring the image data obtained by the imaging.

The imaging means 11 is connected to the imaging device via a wired or wireless network. The imaging means 11 transmits a command to image the paper that has passed through the dry part to the imaging device and causes the imaging device to start the imaging.

On the other hand, the imaging means 11 receives, from the imaging device, the image data obtained by the imaging by the imaging device. A resolution of the image data is preferably 10 to 500 MHz from the viewpoint of a size of a defect to be detected, as described below.

The image data received by the imaging means 11 is stored in the storage means 17.

The imaging device is installed on the downstream side in a paper conveyance direction of the dry part in the papermaking process.

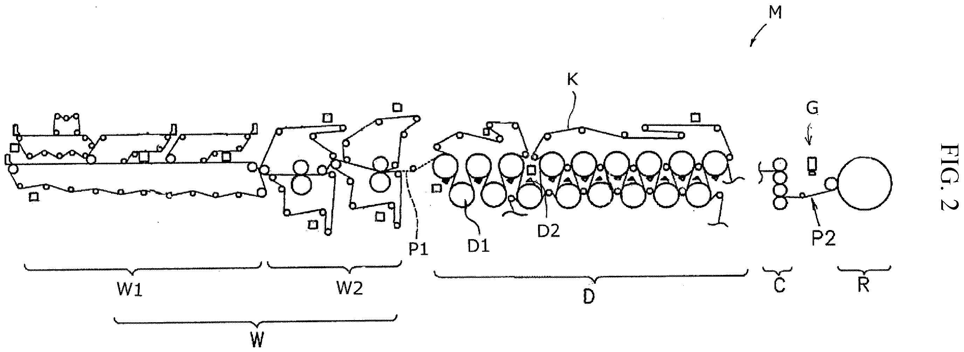

Figure 2 is a schematic side view for illustrating a papermaking process using the defect classification system according to the present embodiment and an installation position of the imaging device.

As illustrated in Figure 2, the papermaking process is performed using a papermaking machine M.

The papermaking process includes a wet part W including a wire part W1 for placing a dispersion liquid having pulp dispersed in water on a wire for papermaking and naturally dropping excess water and a press part W2 for passing the dispersion liquid between a pair of press rolls and pressing the dispersion liquid by the press rolls via a felt, a dry part D for drying the dispersion liquid by bringing the dispersion liquid into contact with a heated dryer roll D1 via a canvas K, a calendar part C, and a reel part R.

A doctor blade D2 for removing a foreign substance that has adhered to a surface of the dryer roll D1 contacts the dryer roll D1.

In the papermaking process, a dispersion of pulp obtained by a paper material preparation process enters a state of so-called wet paper P1 by passing through the wet part W, and enters a state of paper P2 obtained by drying the wet paper P1 by passing through the dry part D.

The paper P2 that has passed through the dry part D passes through the calendar part C, whereby irregularities on a front surface of the paper P2 are smoothed, and the paper P2 is wound by a spool or the like in the reel part R.

An imaging device G is installed above the paper P2 between the calendar part C and the reel part R. As a result, the front surface of the paper P2 is imaged by the imaging device G between the calendar part C and the reel part R.

This eliminates, in the defect classification system 10, the necessity of entering a device where the papermaking process is performed to install, for example, the imaging device G, thereby making it possible to significantly safely and simply perform preparation and maintenance.

Referring to Figure 1 again, the detection means 12 is means for detecting the defect that has occurred in the paper in the image data obtained by the imaging.

As described above, the imaging device G is installed on the downstream side in the paper conveyance direction of the dry part D. Accordingly, the image data uses as a target the paper P2 that has passed through the dry part D. That is, it can be said that the defect detected in the image data occurs in the paper material preparation process or a part before the dry part D in the papermaking process.

The detection means 12 detects not only the defect but also coordinate data of the defect by providing virtual coordinates on the paper. This makes it possible to also estimate, from coordinates of the defect, a further detailed position of a part causing the defect.

The coordinate data of the defect defines the paper conveyance direction and a paper width direction, respectively, as a Y-axis and an X-axis, for example.

As a position as an origin, a front edge of the paper P2 that has reached a start position of the imaging by the imaging device G and a left edge of the paper P2 may be respectively defined as an origin (Y = 0) of the Y-axis and an origin (X = 0) of the X-axis, for example. That is, the left edge of the front edge of the paper P2 may be defined as (X, Y) = (0, 0).

A value of Y may increase in numeral toward the upstream side in a longitudinal direction of the paper P2, and a value of X may increase in numeral toward a right edge from the left edge.

At this time, a distance between adjacent coordinates in an X-axis direction is preferably 0.001 to 10 mm, and a distance between adjacent coordinates in a Y-axis direction is preferably 0.001 to 10 mm. In this case, even when a very small defect occurs in a visible range in the paper P2, the defect can be reliably detected.

In a paper length direction, when the same defect repeatedly occurs in a predetermined cycle, a foreign substance adheres to a roll that guides paper or a loop-shaped tool such as a felt or a canvas, which may cause the defect in the paper.

In this case, from coordinates of the defect, a distance between repeated defects can be calculated. When the foreign substance adheres to the roll, the distance corresponds to a circumference of the roll. Accordingly, a diameter of the roll to which the foreign substance adheres can be estimated. When the foreign substance adheres to the loop-shaped tool, a position to which the foreign substance adheres can be estimated from the distance.

The defect is detected by being converted into a numerical form using intensity measurement or RGB measurement. That is, when an abnormality has occurred in a value obtained by the numerical conversion at predetermined coordinates, it can be said that the defect occurs at the coordinates.

Specifically, when the numerical conversion is performed using the intensity measurement, a video image may be converted into a numerical form by changing the video image into a white and black binary image using grayscale and dividing its light and shade into 256 gray levels from 0 to 255, for example.

When the numerical conversion is performed using the RGB measurement, a specific color (e.g., blue) may be converted into a numerical form.

Thus, the detection means 12 adopts the intensity measurement or the RGB measurement, thereby making it possible to simply identify the presence or absence of a defect.

Data obtained by converting an image of the defect and the coordinate data and the defect detected by the detection means 12 into a numerical form is stored as defect information in the storage means 17.

The extraction means 13 is means for using the data obtained by converting the defect into a numerical form by the detection means 12 to extract a feature amount of the defect.

In the extraction means 13, as a method for extracting the feature amount, a filter method, a wrapper method, an incorporation method, or the like can be appropriately adopted.

In the defect classification system, specific examples of the feature amount to be extracted include a size, a shape, a maximum value, a minimum value, a difference between light and shade, and light and shade of a defect converted into a numerical form.

As a model of deep learning, a CNN (convolutional neural network) model, for example, is used. As a network model, LeNet, AlexNet, VGG (VGG16, VGG19), GoogLeNet, ResNet, or the like can be adopted.

The feature amount of the defect is stored as defect information in the storage means 17.

The calculation means 14 is means for causing the classification model in which the reference feature amount is previously set to calculate the certainty factor for each of the defect cause items on the basis of the feature amount of the defect extracted by the extraction means 13.

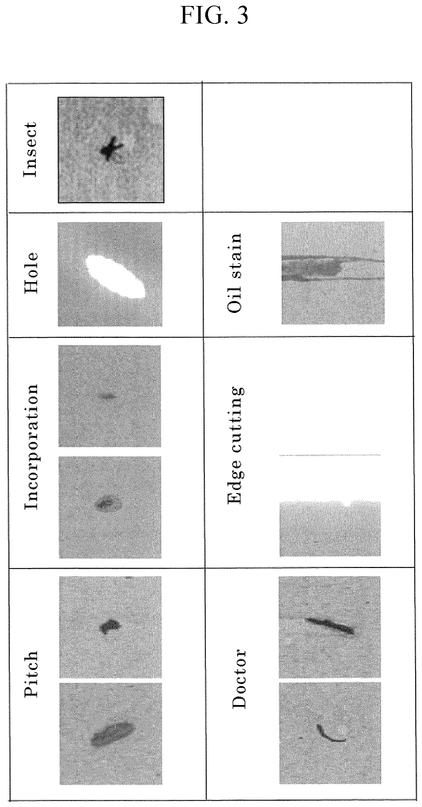

Figure 3 is an explanatory diagram illustrating defect cause items in the defect classification system according to the present embodiment and images of defects respectively included in the defect cause items.

In Figure 3, "pitch" indicates that adhesion of a pitch derived from a roll or derived from a canvas in a dry part is a cause of a defect, "doctor" indicates that adhesion of a pitch derived from a doctor in a dry part is a cause of a defect, and "incorporation" is incorporation of a foreign substance in a paper material preparation process.

"Hole" indicates that a hole is a cause of a defect, "oil stain" indicates that adhesion of oil is a cause of a defect, "insect" indicates that adhesion of an insect is a cause of a defect, and "edge cutting" indicates that an edge of paper is cut is a cause of a defect.

A classification model is caused to learn a reference feature amount using machine learning from defect cause items respectively representing causes of defects illustrated in Figure 3 and feature amounts respectively extracted from images of stored defects included in the defect cause items, for example.

When data of a defect cause item and a feature amount of a defect included in the defect cause item is newly obtained, the classification model can be caused to further lean the data. That is, the reference feature amount can be changed. As a result, an accuracy of a certainty factor to be calculated by the classification model is further improved.

In the defect classification system 10, the defect cause items preferably include at least the item in which adhesion of a foreign substance in a dry part is a cause of a defect. In this case, a certainty factor for this item is recognized, thereby making it possible to recognize whether the cause of the defect is due to the dry part or a part other than the dry part.

In Figure 3, adhesion of a pitch occurs in a dry part, and incorporation occurs in a paper material preparation process. Accordingly, distinction therebetween makes it possible to recognize whether the cause of the defect is due to the paper material preparation process or the dry part.

In the calculation means 14, the classification model calculates the certainty factor for each of the defect cause items with respect to the feature amount of the defect extracted by the extraction means 13.

The calculated certainty factor is displayed by the display means 15.

This makes it possible to recognize the defect cause item in which the certainty factor is high and the defect cause item in which the certainty factor is low.

As the display means 15, a monitor, a touch panel, or the like may be adopted.

Referring to Figure 1 again, the classification means 16 is means for classifying, for one defect, defect information about the defect into a folder of the defect cause item as the certainty factor having a maximum value among the certainty factors respectively calculated for the defect cause items.

This makes it possible to recognize the defect cause item including the defect.

The reference feature amount in the classification model is changed on the basis of the defect information about the defect and the defect cause item into which the defect is classified, thereby making it possible to improve an accuracy of the classification.

In the classification means 16, when the certainty factor having the maximum value is the previously set predetermined value or less, the classification model is preferably caused to further perform learning using machine learning from a relationship between the feature amount of the defect and the defect cause item into which the defect is classified. An operation for such classification may be performed by classifying the defect the certainty factor having the maximum value of which is the previously set predetermined value or less into the defect cause item on the basis of the certainty factor having the maximum value and then a person confirming whether or not the classification is correct, or may be performed by a person classifying the defect the certainty factor having the maximum value of which is the previously set predetermined value or less into the correct defect cause item.

As a result, an accuracy of the certainty factor to be calculated by the classification model is further improved. The predetermined value can be optionally set.

Then, a defect classification method using the defect classification system according to the present embodiment will be described.

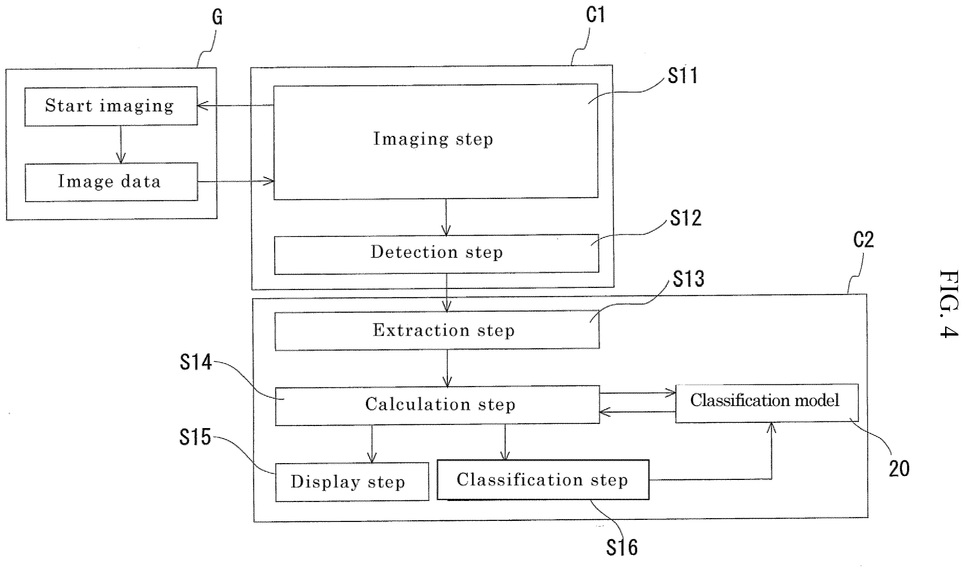

Figure 4 is a flow diagram illustrating the defect classification method according to the present embodiment.

As illustrated in Figure 4, the defect classification method includes an imaging step S11 of causing the imaging device G to image paper that has passed through a dry part and acquiring image data obtained by the imaging, a detection step S12 of detecting a defect in the paper in the image data, an extraction step S13 of extracting a feature amount of the defect, a calculation step S14 of causing a classification model 20 in which a reference feature amount is previously set to calculate a certainty factor in a defect cause item on the basis of the feature amount of the defect, display step S15 of displaying the certainty factor, and a classification step S16 of classifying defect information into the defect cause item in which the certainty factor is a previously set predetermined value or more.

In the defect classification method, at least the imaging means 11 and the detection means 12 are stored in a first computer C1, and at least the extraction means 13, the calculation means 14, the display means 15, the classification means 16, and the storage means 17 are stored in a second computer C2. The first computer C1 and the second computer C2 are connected to each other via a cloud or the like.

Therefore, in the defect classification method, the imaging step S11 and the detection step S12 are effected using the first computer C1, and the extraction step S13, the calculation step S14, the display step S15, and the classification step S16 are effected using the second computer C2.

A plurality of first computers C1 that perform the imaging step S11 and the like may be connected to the second computer C2.

The defect classification method includes the detection step S12 and the extraction step S13, like the above-described defect classification system. Accordingly, the defect that has occurred in the paper is detected, and the feature amount of the defect is extracted.

The defect classification method includes the calculation step S14. Accordingly, the certainty factor for the defect cause item is calculated from the feature amount of the defect.

In the display step S15, the certainty factor is displayed.

From the foregoing, in the defect classification method, the certainty factor for the defect cause item of the defect can be recognized. As a result, it is possible to classify the defect into the defect cause item in which the certainty factor is high, and at the same time to recognize a cause of the defect.

The defect classification method includes the classification step S16. Accordingly, the reference feature amount in the classification model is changed on the basis of the defect information about the defect and the defect cause item into which the defect is classified, thereby making it possible to improve an accuracy of the classification.

Although the preferred embodiment of the present invention has been described above, the present invention is not limited to the above-described embodiment.

In the defect classification system 10 according to the present embodiment, the imaging device G is installed above the paper P2 between the calendar part C and the reel part R, but its position is not limited to this. For example, the imaging device G may be installed below the paper P2, or may be installed above and below the paper P2.

In the defect classification system 10 according to the present embodiment, the papermaking process includes the wet part W, the dry part D, the calendar part C, and the reel part R, but is not limited to this.

For example, the papermaking process need not include the calendar part C and the reel part R.

A processing machine that cuts and recovers paper, for example, may be installed instead of the reel part R.

In the defect classification system 10 according to the present embodiment, the imaging device G is installed above the paper P2 between the calendar part C and the reel part R, but is not limited to this if installed on the downstream side of the dry part D.

For example, the imaging device G may be installed above the paper P2 between the dry part D and the calendar part C.

If the imaging device G is installed on the downstream side of the dry part D, still another imaging device may be provided. In this case, more detailed classification can be performed.

In the defect classification system 10 according to the present embodiment, a position as an origin uses a front edge of the paper P2 and a left edge of the paper P, respectively, as an origin (Y = 0) of the Y-axis and an origin (X = 0) of the X-axis when coordinates are set, but is not limited to this.

Although in the defect classification system 10 according to the present embodiment, a defect is detected by being converted into a numerical form using the intensity measurement or the RGB measurement, the present invention is not limited to this, but light-and-shade processing, pattern search, edge detection, or the like can also be adopted.

### Industrial Applicability

A defect classification system according to the present invention can be used as a system for classifying defect information based on a defect in paper that has passed through a dry part in a papermaking process into a corresponding defect cause item among a plurality of defect cause items previously set.

The defect classification system according to the present invention is simple in preparation and maintenance and can recognize a cause of the defect.

### Reference Signs List

- 10...: defect classification system,
- 11...: imaging means,
- 12...: detection means,
- 13...: extraction means,
- 14...: calculation means,
- 15...: display means,
- 16...: classification means,
- 17...: storage means,
- 20...: classification model,
- C...: calendar part,
- C1, C2...: computer,
- D...: dry part,
- D1...: dryer roll,
- D2...: doctor blade,
- G...: imaging device,
- K...: canvas,
- M...: papermaking machine,
- P1...: wet paper,
- P2...: paper,
- R...: reel part,
- S11...: imaging step,
- S12...: detection step,
- S13...: extraction step,
- S14...: calculation step,
- 515...: display step,
- S16...: classification step,
- W...: wet part,
- W1...: wire part, and
- W2...: press part.

## Claims

1. A defect classification system for classifying defect information based on a defect in paper that has passed through a dry part in a papermaking process into a corresponding defect cause item among a plurality of defect cause items respectively based on causes of defects previously set, the defect classification system comprising:
imaging means for causing an imaging device to image the paper that has passed through the dry part and acquiring image data obtained by the imaging;
detection means for detecting the defect in the paper in the image data;
extraction means for extracting a feature amount of the defect;
calculation means for causing a classification model in which a reference feature amount is previously set to calculate a certainty factor in the defect cause item on the basis of the feature amount of the defect; and
display means for displaying the certainty factor,
wherein the classification model is caused to learn the reference feature amount using machine learning from a relationship between respective feature amounts of defects previously stored and the plurality of defect cause items.

2. The defect classification system according to claim 1, wherein the certainty factor for each of the defect cause items is calculated in the calculation means, and further comprising
classification means for classifying the defect information into the defect cause item as the certainty factor having a maximum value among the plurality of certainty factors.

3. The defect classification system according to claim 2, wherein the classification model is caused to further perform learning using machine learning from a relationship between the feature amount of the defect the certainty factor having the maximum value of which is a previously set predetermined value or less and the defect cause item into which the defect is classified.

4. The defect classification system according to any one of claims 1 to 3, wherein the defect information about the defect includes coordinate data of the defect in a case where the paper is provided with coordinates in addition to the feature amount of the defect.

5. The defect classification system according to any one of claims 1 to 4, wherein the defect cause items include at least the item in which adhesion of a foreign substance in the dry part is a cause of the defect.
